(19) **Europäisches Patentamt European Patent Office Office européen des brevets**

(11) **EP 4 553 859 A1**

(12) **EUROPEAN PATENT APPLICATION**
published in accordance with Art. 153(4) EPC

(43) Date of publication:
**14.05.2025 Bulletin 2025/20**

(21) Application number: **23835411.2**

(22) Date of filing: **29.06.2023**

(51) International Patent Classification (IPC):
*H01B 13/00* (2006.01)    *C01B 25/14* (2006.01)
*H01B 1/06* (2006.01)    *H01B 1/10* (2006.01)
*H01M 10/0562* (2010.01)

(52) Cooperative Patent Classification (CPC):
**C01B 25/14; H01B 1/06; H01B 1/10; H01B 13/00; H01M 10/0562; Y02E 60/10**

(86) International application number:
**PCT/JP2023/024147**

(87) International publication number:
**WO 2024/009879 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.07.2022 JP 2022110807**

(71) Applicant: **Mitsui Mining & Smelting Co., Ltd.**
**Shinagawa-ku**
**Tokyo 141-8584 (JP)**

(72) Inventors:
• **KOBAYASHI, Yasutaka**
  **Ageo-shi, Saitama 362-0021 (JP)**
• **NAKAYAMA, Yuki**
  **Ageo-shi, Saitama 362-0021 (JP)**
• **TAKAHASHI, Tsukasa**
  **Ageo-shi, Saitama 362-0021 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **CRUSHING METHOD OF SULFUR COMPOUND, CRUSHING METHOD OF SOLID ELECTROLYTE, PRODUCTION METHOD OF SOLID ELECTROLYTE, AND SOLID ELECTROLYTE**

(57)    A method for grinding a sulfur compound. The method satisfies a relationship represented by inequality (1):

$$D2/D1 < 0.49 \qquad (1)$$

wherein D1 represents the median diameter of the unground sulfur compound when the grinding includes only a single pass of grinding or, when the grinding includes two or more passes of grinding, the median diameter of the sulfur compound before any pass of grinding; and D2 represents the median diameter of the sulfur compound after grinding when the grinding includes only a single pass of grinding or, when the grinding includes two or more passes of grinding, the median diameter of the sulfur compound after the any pass of grinding.

EP 4 553 859 A1

**Description**

Technical Field

The present invention relates to a method for grinding a sulfur compound, a method for grinding a solid electrolyte, a method for preparing a solid electrolyte, and a solid electrolyte.

Background Art

Most lithium-ion second batteries in use today use an electrolyte solution containing a flammable organic solvent. On the other hand, solvent-free solid-state batteries, which use a solid electrolyte instead of an electrolyte solution, are expected to be put to practical use as batteries with safety combined with high energy density.

The development of solid electrolytes is being vigorously pursued toward the practical application of solid-state batteries. Solid electrolytes generally have a lower ionic conductivity than organic electrolyte solutions, which has made practical application difficult. A solid electrolyte is produced by mixing predetermined raw materials, firing the mixture to obtain a powdery crystalline solid electrolyte, and grinding the powder using a bead mill and the like (patent literature 1 to 3 listed below).

Citation List

Patent Literature:

Patent literature 1: JP 2009-211950A
Patent literature 2: JP 2010-140893A
Patent literature 3: JP 2008-004459A

Summary of Invention

However, the conventional methods of grinding a solid electrolyte cause a reduction in ionic conductivity, resulting in a failure to provide solid-state batteries with expected characteristic performance.

Accordingly, an object of the present invention is to provide a solid electrolyte having excellent ionic conductivity.

The inventors have conducted intensive research to solve the above problem and found that a desired solid electrolyte powder is obtained by devising the process of grinding a solid electrolyte so that the particle sizes before and after the grinding process can satisfy a specific relationship.

The present invention provides a method for grinding a sulfur compound that satisfies a relationship represented by inequality (1):

$$D2/D1 < 0.49 \qquad\qquad (1)$$

wherein D1 represents a median diameter of the sulfur compound before grinding when the grinding comprises only a single pass of grinding, or a median diameter of the sulfur compound before any pass of grinding when the grinding comprises two or more passes of grinding; and

D2 represents a median diameter of the sulfur compound after grinding when the grinding comprises only a single pass of grinding, or a median diameter of the sulfur compound after the any pass of grinding when the grinding comprises two or more passes of grinding.

The present invention also provides a method for grinding a sulfur compound that satisfies a relationship represented by inequality (2):

$$A/B < 3.6 \times 10^{-3} \qquad\qquad (2)$$

wherein A (S/cm) represents a difference between an ionic conductivity (S/cm) of the sulfur compound after grinding and an ionic conductivity (S/cm) of the unground sulfur compound before grinding when the grinding comprises only a single pass of grinding, or a difference in ionic conductivity (S/cm) of the sulfur compound between before and after any pass of grinding when the grinding comprises two or more passes of grinding; and

B ($\mu$m) represents a difference in median diameter ($\mu$m) of the sulfur compound between before and after grinding when the grinding comprises only a single pass of grinding, or a difference in median diameter ($\mu$m) of the sulfur compound between before and after any pass of grinding when the grinding comprises two or more passes of grinding.

The present invention also provides a method for grinding a solid electrolyte including the steps of providing a solid electrolyte and grinding the solid electrolyte, the grinding satisfying a relationship represented by inequality (3):

$$D4/D3 < 0.49 \qquad\qquad (3)$$

wherein D3 represents a median diameter of the solid electrolyte before grinding when the grinding comprises only a single pass of grinding, or a median diameter of the solid electrolyte before any pass of grinding when the grinding comprises two or more passes of grinding; and

D4 represents a median diameter of the solid electrolyte after grinding when the grinding comprises only a single pass of grinding, or a median diameter of the solid electrolyte after the any pass of grinding when the grinding comprises two or more passes of grinding.

The present invention also provides a method for grinding a solid electrolyte including the steps of providing a solid electrolyte and grinding the solid electrolyte, the grinding satisfying a relationship represented by inequality (4):

$$C/D < 3.6 \times 10^{-3} \qquad\qquad (4)$$

wherein C (S/cm) represents a difference between an ionic conductivity (S/cm) of the solid electrolyte after grinding and an ionic conductivity (S/cm) of the solid electrolyte before grinding when the grinding comprises only a single pass of grinding, or a difference in ionic conductivity (S/cm) of the solid electrolyte between before and after any pass of grinding when the grinding comprises two or more passes of grinding; and

D ($\mu$m) represents a difference in diameter ($\mu$m) of the solid electrolyte between before and after grinding when the grinding comprises only a single pass of grinding, or a difference in median diameter ($\mu$m) of the solid electrolyte between before and after any pass of grinding when the grinding comprises two or more passes of grinding.

The present invention also provides a method for preparing a solid electrolyte including grinding a starting solid electrolyte powder, the grinding satisfying a relationship represented by inequality (5):

$$D6/D5 < 0.49 \qquad\qquad (5)$$

wherein D5 represents a median diameter ($\mu$m) of the starting powder when the grinding comprises only a single pass of grinding, or a median diameter ($\mu$m) of the solid electrolyte before any pass of grinding when the grinding comprises two or more passes of grinding; and

D6 represents a median diameter ($\mu$m) of the solid electrolyte after grinding when the grinding comprises only a single pass of grinding, or a median diameter ($\mu$m) of the solid electrolyte after the any pass of grinding when the grinding comprises two or more passes of grinding.

The present invention also provides a method for preparing a solid electrolyte including grinding a starting solid electrolyte powder, the grinding satisfying a relationship represented by inequality (6):

$$E/F < 3.6 \times 10^{-3} \qquad\qquad (6)$$

wherein E (S/cm) represents a difference between an ionic conductivity (S/cm) of the solid electrolyte after grinding and an ionic conductivity (S/cm) of the solid electrolyte before grinding when the grinding comprises only a single pass of grinding, or a difference in ionic conductivity (S/cm) of the solid electrolyte between before and after any pass of grinding when the grinding comprises two or more passes of grinding; and

F ($\mu$m) represents a difference in median diameter ($\mu$m) of the solid electrolyte between before and after grinding when the grinding comprises only a single pass of grinding, or a difference in median diameter ($\mu$m) of the solid electrolyte between before and after any pass of grinding when the grinding comprises two or more passes of grinding.

The present invention also provides a solid electrolyte. The solid electrolyte has a specific surface area S1 (in $m^2$/g) measured by the BET method and a specific surface area S2 (in $m^2$/g) calculated from a particle size distribution in an S1 to S2 ratio of less than 4.5.

Description of Embodiments

The present invention will be elaborated upon on the basis of its preferred embodiments.

The method for grinding a solid electrolyte will be described first. The grinding method of the invention includes the steps of providing a solid electrolyte and grinding the solid electrolyte. The grinding process satisfies a relationship represented by inequality (3):

$$D4/D3 < 0.49 \qquad (3)$$

wherein D3 represents the median diameter ($\mu$m) of the unground solid electrolyte when the grinding includes only a single pass of grinding or, when the grinding includes two or more passes of grinding, the median diameter of the solid electrolyte before any pass of grinding; and D4 represents the median diameter ($\mu$m) of the solid electrolyte after grinding when the grinding includes only a single pass of grinding or, when the grinding includes two or more passes of grinding, the median diameter ($\mu$m) of the solid electrolyte after the any pass of grinding.

The grinding method of the present invention starts with the provision of a solid electrolyte. Examples of the solid electrolyte include sulfide solid electrolytes, oxide solid electrolytes, nitride electrolytes, and halide electrolytes. Preferred of them are sulfide solid electrolytes, namely sulfur-containing solid electrolytes.

The sulfide solid electrolyte may contain lithium (Li) as well as sulfur (S) and have Li-ion conductivity or may contain phosphorous (P) in addition to Li and S and have Li-ion conductivity.

The sulfide solid electrolyte may be any of crystalline materials, glass ceramics, and glass.

The sulfide solid electrolyte may have an argyrodite crystal structure.

Examples of the sulfide solid electrolyte include compounds represented by $Li_2S$-$P_2S_5$, $Li_2S$-$P_2S_5$-LiX (X: at least one halogen element), $Li_2S$-$P_2S_5$-$P_2O_5$, $Li_2S$-$Li_3PO_4$-$P_2S_5$, $Li_3PS_4$, $Li_4P_2S_6$, $Li_{10}GeP_2S_{12}$, $Li_{3.25}Ge_{0.25}P_{0.75}S_4$, $Li_7P_3S_{11}$, $Li_{3.25}P_{0.95}S_4$, and $Li_aPS_bX_c$ (X: at least one halogen element; a: a number of 3.0 to 6.0; b: a number of 3.5 to 4.8; and c: a number of 0.1 to 3.0). The sulfide solid electrolytes described in WO 2013/099834 and WO 2015/001818 are also useful.

When using a sulfide solid electrolyte, it is preferred to use a Li source compound, a P source compound, an S source compound, and, if necessary, an X source compound as starting materials. The Li source compound is, for example, lithium sulfide ($Li_2S$). The P source compound includes diphosphorus pentasulfide ($P_2S_5$). The S source compound may be the sulfide used as a Li source compound and/or a P source compound. The X source compound is exemplified by a LiX. These raw materials are mixed to give a predetermined molar ratio of the Li, P, and S elements and, if necessary, the X element.

The mixing is performed using, for example, a jet mill, a ball mill, a rod mill, a vibrating ball mill, a planetary mill, or a disk mill.

The resulting mixture of the raw materials is fired in, e.g., an inert gas atmosphere, such as a nitrogen or an argon atmosphere. When the mixture is a sulfide composition, it may be fired in a hydrogen sulfide atmosphere.

The firing temperature is preferably 300°C or higher, more preferably 350°C or higher, even more preferably 400°C or higher, and preferably 700°C or lower, more preferably 600°C or lower, even more preferably 550°C or lower.

The firing time is preferably 0.5 hours or longer, more preferably 2 hours or longer, even more preferably 3 hours or longer and preferably 20 hours or shorter, more preferably 10 hours or shorter, even more preferably 5 hours or shorter.

When the firing is carried out under these conditions, a solid electrolyte with higher ionic conductivity can be obtained easily.

The fired product is then disintegrated using a mortar and pestle, a ball mill, and so on. Before being finely ground, the disintegrated product is preferably preground into particles with a predetermined size referred to as a median diameter D3. It should be noted here that, when the median diameter of the disintegrated product and that of the solid electrolyte powder resulting from the pregrinding satisfy inequality (3) below and also inequality (4) described later, the pregrinding may be regarded as fine grinding, so that the pregrinding can be omitted. As used herein, the term "median diameter" refers to a volume cumulative diameter $D_{50}$, which is the diameter at 50% of the cumulative volume, as measured by the laser diffraction particle size distribution analysis.

The pregrinding can be accomplished by a wet or a dry process. Various media mills can be used for pregrinding, including ball mills, bead mills, paint shakers, and homogenizers. Grinding media used in these media mills include balls and beads made of ceramics, such as alumina and zirconia. The grinding media can have diameters of, e.g., 0.1 to 50 mm.

When a wet grinding process is adopted, an organic solvent is preferably used as a dispersing medium in order to prevent the generation of hydrogen sulfide gas due to the reaction between the solid electrolyte and water. Examples of suitable organic solvents include aromatic organic solvents, such as toluene, xylene, benzene, and solvent naphtha, and aliphatic organic solvents, such as heptane, decane, n-hexane, cyclohexane, and mineral spirits. These organic solvents may be used either individually or in combination of two or more thereof.

The solid electrolyte powder with the median diameter D3 ($\mu$m) resulting from the pregrinding is then finely ground to a median diameter D4 ($\mu$m) preferably in a wet process. This fine grinding must be achieved so as to satisfy inequality (3):

$$D4/D3 < 0.49 \qquad (3)$$

It is preferred that the D4/D3 satisfies a relationship: D4/D3 ≤ 0.45, more preferably D4/D3 ≤ 0.4, even more preferably D4/D3 ≤ 0.3, and a relationship: 0.05 ≤ D4/D3, more preferably 0.1 ≤ D4/D3, even more preferably 0.15 ≤ D4/D3. A solid electrolyte powder having excellent ionic conductivity is provided by the grinding process satisfying these relationships.

The fine grinding may be performed in two or more divided passes, designed, for example, by varying the size of the grinding media, to meet the grinding conditions described above and those described below. Therefore, when the step of grinding includes only a single pass of grinding, D3 is the median diameter of the unground solid electrolyte. When the step of grinding includes two or more passes of grinding, D3 indicates the median diameter of the solid electrolyte before any pass of grinding. When the step of grinding includes only a single grinding pass, D4 is the median diameter of the solid electrolyte immediately after the grinding. When the step of grinding includes two or more passes of grinding, D4 indicates the median diameter of the solid electrolyte immediately after the any grinding pass.

The ratio of the grinding time t (min) to the weight m (g) of the solid electrolyte powder, i.e., t/m is preferably greater than 0 and preferably less than 2.3, more preferably 1.5 or less, even more preferably 0.7 or less, whereby a solid electrolyte powder with excellent ionic conductivity can be provided.

The fine grinding may be performed so as to satisfy a relationship represented by inequality (4):

$$C/D < 3.6 \times 10^{-3} \tag{4}$$

wherein C (S/cm) is the difference between the ionic conductivity $\sigma_{C1}$(S/cm) of the solid electrolyte immediately after grinding and the ionic conductivity $\sigma_{C2}$ (S/cm) of the unground solid electrolyte, ($\sigma_{C1}$ - $\sigma_{C2}$), when the grinding includes only a single pass of grinding or, when the grinding includes two or more passes of grinding, the difference between the ionic conductivity $\sigma_{C3}$(S/cm) of the solid electrolyte before any pass of grinding and the ionic conductivity $\sigma_{C4}$ (S/cm) of the solid electrolyte immediately after the any pass of grinding, ($\sigma_{C3}$ - $\sigma_{C4}$); and D ($\mu$m) is the difference between the median diameter $d_{D1}$ ($\mu$m) of the unground solid electrolyte and the median diameter $d_{D2}$ ($\mu$m) of the solid electrolyte immediately after grinding when the grinding includes only a single pass of grinding, ($d_{D1}$ - $d_{D2}$),or, when the grinding includes two or more passes of grinding, the difference between the median diameter $d_{D3}$ ($\mu$m) of the solid electrolyte before any pass of grinding and the median diameter $d_{D4}$ ($\mu$m) of the solid electrolyte immediately after the any pass of grinding, ($d_{D3}$ - $d_{D4}$).

As used herein, the term "ionic conductivity" refers to the value measured at 25°C.

Inequality (3) specifies the condition for fine grinding of the solid electrolyte with a focus on the median diameter, which is a direct condition for grinding, while inequality (4) specifies the condition by focusing not only on the median diameter but also on the ionic conductivity, which is the target physical characteristic.

The C/D in inequality (4) preferably satisfies a relationship: 0 ≤ C/D and more preferably satisfies a relationship: C/D ≤ 3.0 × 10$^{-3}$, even more preferably C/D ≤ 2.5 × 10$^{-3}$, thereby providing the solid electrolyte powder with further improved ionic conductivity.

The reason for the improvement of the ionic conductivity of the solid electrolyte powder obtained by satisfying the above grinding conditions, i.e., inequalities (3) and (4), is as follows. The size reduction of the solid electrolyte powder increases the contact area between the solid electrolyte particles, resulting in an improvement of the volume ionic conductivity. At the same time, the proportion of fine particles that do not contribute to the volume conductivity is reduced, thereby suppressing an increase in the interface of the solid electrolyte powder, which causes the ionic conductivity to decrease.

From the above perspectives, the grinding is performed preferably at 25°C or lower, more preferably 15°C or lower, even more preferably 5°C or lower, and preferably -15°C or higher, more preferably -10°C or higher. Within the above temperature ranges, the size reduction of the solid electrolyte powder is achieved while preventing agglomeration of the power particles. As a result, the ionic conductivity is further improved with the increase in volume conductivity, and the increase in the interface of the solid electrolyte powder, which causes the ionic conductivity to decrease, is suppressed. The temperature referred to above is the temperature of the coolant circulating in the jacket of a grinder.

The diameter of the grinding media for use in the grinding is preferably 0.1 mm or greater and preferably 50 mm or smaller, more preferably 10 mm or smaller, even more preferably 1.0 mm or smaller.

When the fine grinding is performed by a wet grinding process, the solid electrolyte powder is mixed with the organic solvent to form a slurry, which is subjected to the wet grinding. The concentration of the solid electrolyte powder in the slurry is preferably in the range of from 5 to 50 mass% to successfully obtain a solid electrolyte powder having a high Li-ion conductivity.

When in carrying out the wet grinding using a media mill, the grinding media are preferably used in an amount of 5 to 50 parts by mass per 100 parts by mass of the slurry in order to easily obtain a solid electrolyte powder constituting a solid electrolyte having a high Li-ion conductivity.

The dispersing time in the media mill is generally preferably in the range of from 0.1 to 60 hours, more preferably 0.5 to 60 hours, in order to easily obtain a solid electrolyte powder with a high Li-ion conductivity.

The solid electrolyte obtained by the grinding process described above, hereinafter also called the solid electrolyte powder, has a ratio of a specific surface area S1 ($m^2/g$) measured by the BET method to a specific surface area S2 ($m^2/g$) calculated from the particle size distribution, S1/S2, of less than 4.5. The S1/S2 is preferably 4.2 or smaller, more preferably 3.9 or smaller, even more preferably 3.5 or smaller, and may be greater than 0, or 0.5 or greater, or 1.0 or greater. The specific surface area S1 measured by the BET method is a physical quantity representing the total surface area of the main body of the above-mentioned solid electrolyte powder and fine particles that do not contribute to the ionic conductivity, whilst the specific surface area calculated from the particle size distribution is a physical quantity representing the specific surface area of the solid electrolyte powder except for the fine particles. A smaller S1/S2 value indicates a smaller proportion of the fine particles having little contribution to the ionic conductivity. It is therefore understood from the physical properties that the solid electrolyte powder obtained from the grinding method described above has a dominant volume ionic conductivity and a high ionic conductivity.

The solid electrolyte powder preferably has a volume cumulative diameter $D_{90}$, which is the diameter at 90% of the cumulative volume in laser diffraction particle size distribution analysis, of smaller than 40 $\mu m$, more preferably 30 $\mu m$ or smaller, even more preferably smaller than 5.9 $\mu m$, yet more preferably 5.0 $\mu m$ or smaller, still more preferably 4.0 $\mu m$ or smaller, as measured by the laser diffraction particle size distribution analysis. The volume cumulative diameter $D_{90}$ is preferably 0.7 $\mu m$ or larger, more preferably 1.0 $\mu m$ or larger. With the particle size of the solid electrolyte powder being in the above ranges, the solid electrolyte powder particles are in dense contact with each other, making the volume ionic conductivity dominant, thus providing a solid electrolyte having a high ionic conductivity.

The ratio of the ionic conductivity (S/cm) to the median diameter $D_{50}$ ($\mu m$) of the solid electrolyte powder is preferably greater than $1.3 \times 10^{-3}$, more preferably $2.0 \times 10^{-3}$ or greater, even more preferably $2.5 \times 10^{-3}$ or greater, yet more preferably $3.0 \times 10^{-3}$ or greater, and preferably 1.0 or lower, more preferably 0.1 or lower. When the solid electrolyte powder satisfies the above condition, a high ionic conductivity is exhibited.

The ratio of the crystallite size (Å) to the median diameter $D_{50}$ ($\mu m$) of the solid electrolyte powder is preferably 325 or greater, more preferably 330 or greater, even more preferably 400 or greater, yet more preferably 750 or greater. The above ratio may be 1200 or smaller, or 900 or smaller. A larger crystallite size of the solid electrolyte means a reduced interface of the crystal grains and a further increased volume conductivity, thereby providing a solid electrolyte powder having a high ionic conductivity.

The thus obtained solid electrolyte powder of the present invention can be used as a material forming a solid electrolyte layer or a material of an electrode mixture containing an active material. Specifically, it is useful as a positive electrode mixture forming a positive electrode layer containing a positive electrode active material or as a negative electrode mixture forming a negative electrode layer containing a negative electrode active material. Therefore, the solid electrolyte powder of the present invention is useful in batteries having a solid electrolyte layer, namely solid-state batteries. More specifically, it can be used in lithium solid-state batteries, which can be either primary or secondary and are preferably secondary. As used herein, the term "solid-state" includes not only all-solid-state in which neither liquid nor gel is used as the electrolyte but also semi-solid-state in which the electrolyte contains no more than 50, 30, or 10 mass% of liquid or gel materials as the electrolyte.

The solid electrolyte layer in a solid-state battery cell can be formed by, for example, forming a coating layer by a method including dropwise applying a slurry containing the solid electrolyte powder of the present invention, a binder, and a solvent onto a substrate and removing the excess slurry by, e.g., doctor-blading, a method including bringing the slurry into contact with the substrate and removing the excess slurry by air-knifing, or by a screen printing method and removing the solvent from the coating layer by heat drying. The solid electrolyte layer may also be formed by press forming the solid electrolyte powder of the invention into sheet form, followed by appropriate processing. The solid electrolyte layer may contain other solid electrolyte powders in addition to the solid electrolyte powder of the invention. The thickness of the solid electrolyte layer is typically preferably 5 to 300 $\mu m$, more preferably 10 to 100 $\mu m$.

In order to enhance the Li-ion conductivity, the solid electrolyte layer containing the solid electrolyte powder of the present invention preferably has a porosity of not more than 50%, more preferably 30% or less, even more preferably 20% or less. The porosity of the solid electrolyte layer can be adjusted by, for example, controlling the pressure applied to the solid electrolyte powder to be compressed into sheet form. The pressing pressure is preferably 20 MPa or higher.

The porosity of the solid electrolyte layer can be calculated from the true and the apparent densities obtained using, for example, a water displacement method (Archimedes' method) according to formula:

$$\text{Porosity (\%)} = (\text{true density} - \text{apparent density})/\text{true density} \times 100$$

The solid-state battery cell includes a positive electrode layer, a negative electrode layer, and a solid electrolyte layer between the positive and the negative electrode layers, and the solid electrolyte of the present invention is preferably incorporated in the solid electrolyte layer. The shapes of the solid-state battery include laminate film, cylindrical, prismatic, and so forth.

In the solid-state battery cell, the positive electrode mixture containing the solid electrolyte powder of the present invention contains a positive electrode active material. As the positive electrode active material, any material used in lithium secondary batteries may be used as appropriate. Examples of suitable positive electrode active materials include spinel type lithium transition metal compounds and lithium metal oxides having a layer structure. The positive electrode mixture may contain other materials, such as a conductivity aid, in addition to the positive electrode active material.

The negative electrode mixture of the solid-state battery cell containing the solid electrolyte powder of the invention contains a negative electrode active material. As the negative electrode active material, any negative electrode mixture used in lithium secondary batteries as a negative electrode active material may be used as appropriate. Examples of useful negative electrode active materials include metallic lithium, carbonaceous materials, such as artificial graphite, natural graphite, and non-graphitizing carbon (hard carbon), lithium titanate, titanium niobium complex oxide, silicon, silicon compounds, tin, and tin compounds. The negative electrode mixture may contain other materials, such as a conductivity aid, in addition to the negative electrode active material.

Although the present invention has been described with respect to the grinding of a solid electrolyte, the method of grinding described above is applicable to the grinding of a sulfur compound that is not limited to a solid electrolyte, that is, a sulfur compound that may or may not have ionic conductivity. The sulfur compound may be any compound that contains a sulfur element (S), with those containing at least one of lithium (Li), phosphorus (P), and a halogen (X) being preferred. The element X can be at least one of fluorine (F), chlorine (Cl), bromine (Br), and iodine (I). When applying the invention to the grinding of a sulfur compound, inequalities (3) and (4) are represented by inequalities (1) and (2), respectively, shown below.

$$D2/D1 < 0.49 \tag{1}$$

wherein D1 represents the median diameter ($\mu$m) of the unground sulfur compound when the grinding includes only a single pass of grinding or, when the grinding includes two or more passes of grinding, the median diameter ($\mu$m) of the sulfur compound before any pass of grinding; and D2 represents the median diameter ($\mu$m) of the sulfur compound immediately after grinding when the grinding includes only a single pass of grinding or, when the grinding includes two or more passes of grinding, the median diameter ($\mu$m) of the sulfur compound immediately after the any pass of grinding.

$$A/B < 3.6 \times 10^{-3} \tag{2}$$

wherein A (S/cm) represents the difference between the ionic conductivity $\sigma_{A1}$(S/cm) of the sulfur compound immediately after grinding and the ionic conductivity $\sigma_{A2}$ (S/cm) of the unground sulfur compound, ($\sigma_{A1} - \sigma_{A2}$), when the grinding includes only a single pass of grinding or, when the grinding includes two or more passes of grinding, the difference between the ionic conductivity $\sigma_{A3}$ (S/cm) of the sulfur compound before any passe of grinding and the ionic conductivity $\sigma_{A4}$ (S/cm) of the sulfur compound immediately after the any grinding pass,($\sigma_{A3} - \sigma_{A4}$); and B represents the difference between the median diameter $d_{B1}$ ($\mu$m) of the unground sulfur compound and the median diameter $d_{B2}$ ($\mu$m) of the sulfur compound immediately after grinding, ($d_{B1} - d_{B2}$), when the grinding includes only a single pass of grinding, or, when the grinding includes two or more passes of grinding, the difference between the median diameter $d_{B3}$ ($\mu$m) of the sulfur compound before any pass of grinding and the median diameter $d_{B4}$ ($\mu$m) of the sulfur compound immediately after the any pass of grinding,($d_{B3} - d_{B4}$).

The above-described method for grinding a solid electrolyte is also applicable to the preparation of a solid electrolyte. The method for preparing a solid electrolyte includes preparing a starting solid electrolyte powder from predetermined raw materials and grinding the starting solid electrolyte powder. In this method, the inequalities (3) and (4) in the method for grinding a solid electrolyte are represented by inequalities (5) and (6) below.

$$D6/D5 < 0.49 \tag{5}$$

wherein D5 represents the median diameter ($\mu$m) of the starting powder when the grinding includes only a single pass of grinding or, when the grinding includes two or more passes of grinding, the median diameter ($\mu$m) of the solid electrolyte before any pass of grinding; and D6 represents the median diameter ($\mu$m) of the solid electrolyte immediately after grinding when the grinding includes only a single pass of grinding or, when the grinding includes two or more passes of grinding, the median diameter ($\mu$m) of the solid electrolyte immediately after the any pass of grinding.

$$E/F < 3.6 \times 10^{-3} \tag{6}$$

wherein E (S/cm) represents the difference between the ionic conductivity $\sigma_{E1}$(S/cm) of the solid electrolyte immediately after grinding and the ionic conductivity $\sigma_{E2}$ (S/cm) of the unground solid electrolyte, ($\sigma_{E1}$ - $\sigma_{E2}$), when the grinding includes only a single pass of grinding or, when the grinding includes two or more passes of grinding, the difference between the ionic conductivity $\sigma_{E3}$ (S/cm) of the solid electrolyte before any grinding pass and the ionic conductivity $\sigma_{E4}$ (S/cm) of the solid electrolyte immediately after the any grinding pass,($\sigma_{E3}$ - $\sigma_{E4}$); and F represents the difference between the median diameter $d_{F1}$ ($\mu$m) of the unground solid electrolyte and the median diameter $d_{F2}$ ($\mu$m) of the solid electrolyte immediately after grinding, ($d_{F1}$ - $d_{F2}$), when the grinding includes only a single pass of grinding, or, when the grinding includes two or more passes of grinding, the difference between the median diameter $d_{F3}$ ($\mu$m) of the solid electrolyte before any pass of grinding and the median diameter $d_{F4}$ ($\mu$m) of the solid electrolyte immediately after the any pass of grinding, ($d_{F3}$ - $d_{F4}$).

The sulfur compound preferably has Li-ion conductivity. As used herein, the phrase "to have Li-ion conductivity" means capability of functioning as an electrolyte when used in a lithium ion battery. The sulfur compound preferably has a Li-ion conductivity at room temperature (25°C) of at least 4.0 mS/cm, more preferably 4.2 mS/cm or more, even more preferably 5.0 mS/cm or more, yet more preferably 5.5 mS/cm or more, still more preferably 6.0 mS/cm or more. The Li-ion conductivity can be determined by the method described in Examples hereinafter given.

The following clauses are illustrative of various aspects of the present invention.

1. A method for grinding a sulfur compound, the method satisfying a relationship represented by inequality (1):

$$D2/D1 < 0.49 \qquad (1)$$

wherein D1 represents a median diameter of the sulfur compound before grinding when the grinding comprises only a single pass of grinding, or a median diameter of the sulfur compound before any pass of grinding when the grinding comprises two or more passes of grinding; and
D2 represents a median diameter of the sulfur compound after grinding when the grinding comprises only a single pass of grinding, or a median diameter of the sulfur compound after the any pass of grinding when the grinding comprises two or more passes of grinding.

2. The method for grinding a sulfur compound according to clause 1, wherein the ratio of the grinding time t (min) to the weight m (g) of the sulfur compound is greater than 0 and less than 2.3.

3. A method for grinding a sulfur compound, the method satisfying a relationship represented by inequality (2):

$$A/B < 3.6 \times 10^{-3} \qquad (2)$$

wherein A (S/cm) represents a difference between an ionic conductivity (S/cm) of the sulfur compound after grinding and an ionic conductivity (S/cm) of the sulfur compound before grinding when the grinding comprises only a single pass of grinding, or a difference in ionic conductivity (S/cm) of the sulfur compound between before and after any pass of grinding when the grinding comprises two or more passes of grinding; and
B ($\mu$m) represents a difference in median diameter ($\mu$m) of the sulfur compound between before and after grinding when the grinding comprises only a single pass of grinding, or a difference in median diameter ($\mu$m) of the sulfur compound between before and after any pass of grinding when the grinding comprises two or more passes of grinding.

4. The method for grinding a sulfur compound according to any one of clauses 1 to 3, wherein the sulfur compound has lithium-ion conductivity.

5. A method for grinding a solid electrolyte including the steps of providing a solid electrolyte and grinding the solid electrolyte, the grinding satisfying a relationship represented by inequality (3):

$$D4/D3 < 0.49 \qquad (3)$$

wherein D3 represents a median diameter of the solid electrolyte before grinding when the grinding comprises only a single pass of grinding, or a median diameter of the solid electrolyte before any pass of grinding when the grinding comprises two or more passes of grinding; and
D4 represents a median diameter of the solid electrolyte after grinding when the grinding comprises only a single pass of grinding, or a median diameter of the solid electrolyte after the any pass of grinding when the grinding comprises two or more passes of grinding.

6. The method for grinding a solid electrolyte according to clause 5, wherein the ratio of a grinding time t (min) to the weight m (g) of the solid electrolyte is greater than 0 and less than 2.3.

7. A method for grinding a solid electrolyte including the steps of providing a solid electrolyte and grinding the solid electrolyte, the grinding satisfying a relationship represented by inequality (4):

$$C/D < 3.6 \times 10^{-3} \qquad (4)$$

wherein C (S/cm) represents a difference between an ionic conductivity (S/cm) of the solid electrolyte after grinding and an ionic conductivity (S/cm) of the solid electrolyte before grinding when the grinding comprises only a single pass of grinding, or a difference in ionic conductivity (S/cm) of the solid electrolyte between before and after any pass of grinding when the grinding comprises two or more passes of grinding; and

D ($\mu$m) represents a difference in median diameter ($\mu$m) of the solid electrolyte between before and after grinding when the grinding comprises only a single pass of grinding, or a difference in median diameter ($\mu$m) of the solid electrolyte between before and after any pass of grinding when the grinding comprises two or more passes of grinding.

8. The method for grinding a solid electrolyte according to any one of clauses 5 to 7, wherein the providing includes mixing raw materials constituting the solid electrolyte and firing the resulting mixture.

9. A method for preparing a solid electrolyte including grinding a starting solid electrolyte powder, the grinding satisfying a relationship represented by inequality (5):

$$D6/D5 < 0.49 \qquad (5)$$

wherein D5 represents a median diameter ($\mu$m) of the starting powder when the grinding comprises only a single pass of grinding, or a median diameter ($\mu$m) of the solid electrolyte before any pass of grinding when the grinding comprises two or more passes of grinding; and

D6 represents a median diameter ($\mu$m) of the solid electrolyte after grinding when the grinding comprises only a single pass of grinding, or a median diameter ($\mu$m) of the solid electrolyte after the any pass of grinding when the grinding comprises two or more passes of grinding.

10. The method for preparing a solid electrolyte according to clause 9, wherein the ratio of the grinding time t (min) to the weight m (g) of the solid electrolyte is greater than 0 and less than 2.3.

11. A method for preparing a solid electrolyte including grinding a starting solid electrolyte powder, the grinding satisfying a relationship represented by inequality (6):

$$E/F < 3.6 \times 10^{-3} \qquad (6)$$

wherein E (S/cm) represents a difference between an ionic conductivity (S/cm) of the solid electrolyte after grinding and an ionic conductivity (S/cm) of the solid electrolyte before grinding when the grinding comprises only a single pass of grinding, or a difference in ionic conductivity (S/cm) of the solid electrolyte between before and after any pass of grinding when the grinding comprises two or more passes of grinding; and

F ($\mu$m) represents a difference in median diameter ($\mu$m) of the solid electrolyte between before and after grinding when the grinding comprises only a single pass of grinding, or a difference in median diameter ($\mu$m) of the solid electrolyte between before and after any pass of grinding when the grinding comprises two or more passes of grinding.

12. A solid electrolyte having a ratio of a specific surface area S1 ($m^2$/g) measured by the BET method to a specific surface area S2 ($m^2$/g) calculated from a particle size distribution and a true density, S1/S2, of less than 4.5.

13. The solid electrolyte according to clause 12, having a volume cumulative diameter $D_{90}$, the diameter at 90% of the cumulative volume in laser diffraction particle size distribution analysis, of less than 5.9 $\mu$m.

14. The solid electrolyte according to clause 12 or 13, having a ratio of its ionic conductivity (S/cm) to its volume cumulative diameter $D_{50}$ ($\mu$m) at 50% of the cumulative volume in laser diffraction particle size distribution analysis of greater than $1.3 \times 10^{-3}$.

15. The solid electrolyte according to any one of clauses 12 to 14, having a ratio of its crystallite size (Å) to its volume cumulative diameter $D_{50}$ ($\mu$m) at 50% of the cumulative volume in laser diffraction particle size distribution analysis of 325 or greater.

16. The solid electrolyte according to any one of clauses 12 to 15, containing a lithium (Li) element, a phosphorous (P) element, and a sulfur (S) element.

Examples

In Examples, all the parts, percents, and ratios are given by mass unless otherwise specified.

Example 1

$Li_2S$ powder, $P_2S_5$ powder, LiCl powder, and LiBr powder were weighed out to give a composition of $Li_{5.4}PS_{4.4}Cl_{0.8}Br_{0.8}$ and mixed in a ball mill. The mixed powder was fired at 490°C for 4 hours in a tubular electric furnace with 100% pure hydrogen sulfide gas flowing in the furnace at 3.0 L/min. The resulting fired product was found by XRD to have a crystal phase of an argyrodite crystal structure.

The fired product was preground in a conventional manner to give a solid electrolyte with a median diameter $D_{50}$ of about 3 $\mu$m. The preground product was mixed with toluene as an organic solvent to form a 15% slurry. The slurry was then finely wet ground in a jacketed bead mill (First Mill from Ashizawa Finetech Ltd.) for 10 minutes using 31 parts of 0.2 mm diameter alumina beads per 100 parts of the slurry while circulating a coolant of 0°C in the jacket. The ratio of D2 (the median diameter of the finely ground solid electrolyte powder) to D1 (the median diameter of the preground solid electrolyte powder), D2/D1, to was 0.27, and the grinding time per unit weight (g) of the slurry (t/m) was 0.67 min/g.

After the wet fine grinding, the slurry was solid-liquid separated, and the solids were dried and sieved through a sieve with an aperture of 53 $\mu$m to obtain a solid electrolyte powder. The other conditions, such as energy, were appropriately determined according to the desired solid electrolyte powder.

The other characteristics of the resulting solid electrolyte powder are shown in Table 1. In Table 1, "SSA" stands for specific surface area.

The median diameter $D_{50}$, particle diameter $D_{90}$, specific surface areas, crystallite size, ionic conductivity change, and particle size change of the solid electrolyte powder were determined under the following conditions.

(1) $D_{50}$ and $D_{90}$

A sample delivery controller (Microtrac SDC from MicrotracBEL Corp.) for a laser diffraction particle size analyzer was used. A sample powder was added to toluene as an organic solvent to prepare a sample slurry, and the sample slurry was ultrasonicated at 30 W for 60 seconds at least twice at a flow rate of 50%. Then the sample slurry was subjected to particle size distribution analysis using a laser diffraction particle size distribution analyzer MT3000II from MicrotracBel. The $D_{50}$ and $D_{90}$ of the particles were obtained from the resulting volume distribution.

The particle size distribution of the solid electrolyte by the laser diffraction analysis was performed according to the following procedure. The sample slurry containing the solid electrolyte was ultrasonicated at 30 W for 60 seconds while being delivered at a flow rate of 50% in Microtrac SDC. The particle size distribution of the sample slurry was then determined using a laser diffraction particle size analyzer MT3000II. The particle diameters $D_{50}$ and $D_{90}$, which are the particle diameters at 50% and 90%, respectively, in the resulting cumulative volume-based distribution, were obtained. For the determination of $D_{50}$ and $D_{90}$, the organic solvent was filtered through a 60 $\mu$m filter. The refractive index of the solvent was entered as 1.50. For the particle transparency condition, "Transparency" was selected. The refractive index of the particles was entered as 1.59. "Non-spherical" was selected for the particle shape. The measurement range was 0.133 to 704.0 $\mu$m, with a measuring time of 10 seconds. Two runs were performed, and the averages of the $D_{50}$ and $D_{90}$ values were calculated.

The sample slurry containing the solid electrolyte was prepared as follows. The solid electrolyte weighing 0.3 g and 5.7 g of a dispersant-containing liquid (toluene:dispersant (SN Dispersant 9228, from San Nopco Ltd.) = 19:1) were mixed manually to form a slurry containing the solid electrolyte. To prepare a solid electrolyte sample slurry, 6 ml of the solid electrolyte slurry was added to toluene as an organic solvent.

The determination of $D_{50}$ and $D_{90}$ of the unground solid electrolyte powder was performed in the same manner as described above, except that a sample slurry containing the unground powder was used. The sample slurry containing the unground powder was prepared by preparing a slurry containing the unground power as described later, separately adding a few drops of a dispersant SN Dispersant 9228 from San Nopco to an organic solvent (toluene), and adding a few drops of the slurry containing the unground powder to the dispersant/toluene mixed liquid.

(2) Specific surface area

(2-1) Measurement of BET specific surface area

As a pretreatment, a sample powder was heated in vacuo at 120°C for 1 hour using a vacuum degasser BELPREP-vacII from MicrotracBEL. The specific surface area of the sample was calculated according to the BET method from the nitrogen gas adsorption measured at a liquid nitrogen temperature (77K) using a specific surface area analyzer BELSORP-mini II from MicrotracBEL. The pretreatment was carried out under reduced pressure at 120°C for at least 30 minutes. He was used as the purge gas. $N_2$ was used as the adsorbate. The specific surface area as obtained by the BET method is denoted S1 ($m^2$/g).

(2-2) Specific surface area calculated from particle size distribution and true density (2-2-1) CS value

A CS value of a powder is a surface area of powder particles, assumed to be spherical, per unit volume and is provided in units $m^2$/$cm^3$. It is calculated from the volume particle size distribution measured by the laser diffraction method according to formula: CS (m$^2$/cm$^3$) = 6/MA, where MA is a mean area diameter in $\mu$m calculated from formula: MA ($\mu$m) = $\Sigma$Vi/$\Sigma$(Vi/di), where Vi is the frequency of the particles in size class i; and di is the median diameter of the particles in size class i. The particle size distribution for the calculation of CS is obtained using the MT3000 II from MicrotracBEL in the same manner as for the determination of D$_{50}$ and D$_{90}$.

(2-2-2) True density

The true density of the sample powder in units g/cm$^3$ was calculated by the gas displacement method using a true density analyzer BELPycno from MicrotracBEL. The pretreatment was conducted by purging five times. The measurement used a 10-cc alumina cell, and the cell was filled with the sample up to about 70% of its capacity.

(2-2-3) S2 = X/Y

The value S2 of a powder, which is calculated from formula: S2 = X/Y (where X is the true density (g/cm$^3$) of the powder; and Y is the CS (m$^2$/cm$^3$) of the powder), is the surface area of the powder obtained by dividing the CS (m$^2$/cm$^3$) of the powder particles, assumed to be spherical, obtained from the particle size distribution analysis by the true density (g/cm$^3$). This is defined as the specific surface area S2 (m$^2$/g) calculated from the particle size distribution.

(3) Crystallite size

The crystallite size was measured under a non-atmospheric exposure condition using a powder XRD analyzer SmartLab SE from Rigaku Corp. The measurement conditions were:

- Tube voltage: 40 kV
- Tube current: 50 mA
- X-ray: CuK$\alpha$ radiation (CuK$\alpha$1:CuK$\alpha$2 = 2:1 in intensity)
- Optical configuration: Bragg-Brentano optics
- Detector: one-dimensional detector
- Measuring range: 2$\theta$ = 10°-120°
- Step size: 0.02°
- Scanning rate: 1°/min

XRD data were also collected from LaB$_6$ (NIST SRM660c) and Si (NIST SRM640f) under the same conditions as above to give peak width standards and angle standards, respectively.

Data analysis was performed using the SmartLab Studio II software from Rigaku in accordance with the following procedure. First, substances were identified by reading the Crystallographic Information File available from Inorganic Crystal Structure Database (ICSD). The ICSD collection code 418488 was used for analyzing sulfide solid electrolytes. Next, Rietveld analysis was performed using the WPPF method. A width standard data file was selected for width correction. This file corresponds to the XRD data measured for SRM 660c, identified with LaB$_6$, analyzed using the same method as described below, and saved. An angle standard data file was also selected for angle correction. This file corresponds to the XRD data measured on SRM 640f, identified with Si, analyzed in the same manner as described below, and saved. The angles and widths of the peaks were corrected using external standards. A split pseudo-Voigt function was used as the model function for the peak shape. Next, the "Basic" tab was accessed, followed by "Refinement Parameter Settings," then "Methods," and the "Rietveld/d-1 pattern" was selected.

Refinement was then performed by adjusting various parameters until sufficient convergence was achieved. For example, the S value of 1.5 or less was considered adequate. The crystallite sizes were obtained from "Display" $\rightarrow$ "Analysis Results".

(4) Ionic conductivity

Each of the solid electrolyte powders obtained in Examples and Comparative Example was uniaxially compressed into a pellet of 10 mm in diameter and about 1 to 8 mm in thickness at a pressure of about 6 t/cm$^2$ in a glove box purged with sufficiently dried argon gas (dew point: -60°C or lower) to prepare a sample for the measurement of Li-ion conductivity. The Li-ion conductivity was measured using a Solartron 1255B electrochemical test system (1280C) and Impedance/Gain-Phase Analyzer (SI 1260) available from Solartron Analytical. The measurement conditions were an AC impedance method at a temperature of 25°C, with a frequency range of 100 Hz to 1 MHz and an amplitude of 100 mV.

(5) Change of particle size

In the case where the grinding step includes only a single pass of grinding, the difference between the grain diameter $d_{B1}$ ($\mu$m) of the unground sulfur compound and the grain diameter $d_{B2}$ ($\mu$m) of the sulfur compound immediately after the grinding, ($d_{B1}$ - $d_{B2}$), was calculated. When the grinding includes two or more passes of grinding, the difference between the grain diameter $d_{B3}$ ($\mu$m) of the sulfur compound before any pass of grinding and the grain diameter $d_{B4}$ ($\mu$m) of the sulfur compound immediately after the any pass of grinding, ($d_{B3}$ - $d_{B4}$), was calculated.

Example 2

A solid electrolyte powder was obtained in the same manner as in Example 1, except for changing the bead diameter to 0.5 mm, the time for fine grinding to 35 minutes, the ratio of the median diameter D2 after the fine grinding to the median diameter D1 after the pregrinding, D2/D1, to 0.37, and the grinding time per gram (t/m) to 2.3 min/g. The results obtained are shown in Table 1.

Comparative Example 1

A solid electrolyte powder was obtained in the same manner as in Example 1, except for changing the bead diameter of 0.3 mm, the time for fine grinding to 35 minutes, the ratio of the median diameter D2 after the fine grinding to the median diameter D1 after the pregrinding, D2/D1, to 0.49, and the grinding time per gram (t/m) to 2.3 min/g and for circulating a coolant of 10°C in the jacket. The results obtained are shown in Table 1.

Table 1

| | | Example 1 | Example 2 | Compara. Example 1 |
|---|---|---|---|---|
| Solid Electrolyte Grinding Conditions | Bead Size (mm) | 0.2 | 0.5 | 0.3 |
| | Fine Grinding Time (min) | 10 | 35 | 35 |
| | Coolant Temp. (°C) | 0 | 0 | 10 |
| | $D_6/D_5$ ($D_4/D_3$, $D_2/D_1$) | 0.27 | 0.37 | 0.49 |
| | Grinding Time/gram t/m (min/g) | 0.67 | 2.3 | 2.3 |
| | Ionic Conductivity Change/Particle Size Change (E/F, C/D, A/B) | $2.16 \times 10^{-3}$ | $2.76 \times 10^{-3}$ | $3.61 \times 10^{-3}$ |
| Characteristics of Solid Elec-trolyte | BET SSA S1/Particle Size Distribution SSA S2 | 3.0 | 3.9 | 4.5 |
| | $D_{90}$ ($\mu$m) | 2.0 | 4.9 | 5.9 |
| | Ionic Conductivity/$D_{50}$ | $3.4 \times 10^{-3}$ | $2.0 \times 10^{-3}$ | $1.3 \times 10^{-3}$ |
| | Crystallite Size/$D_{50}$ (Å/$\mu$m) | 776 | 423 | 325 |

According to Examples, the relationships of inequalities (1) and (2) and also inequalities (3) and (4) being satisfied, it is seen that ionic conductivities of the ground solid electrolytes, specifically the ratios of the ion conductivity (S/cm) to the median diameter $D_{50}$ (the diameter at 50% of the cumulative volume) ($\mu$m), ionic conductivity/$D_{50}$, are higher than $1.3 \times 10^{-3}$. On the other hand, in Comparative Example in which inequalities (1) and (2) and also inequalities (3) and (4) are not satisfied, the ionic conductivity/$D_{50}$ is $1.3 \times 10^{-3}$, which is lower than in Examples.

Industrial Applicability

The present invention provides a solid electrolyte powder constituting a solid electrolyte excellent in ionic conductivity.

**Claims**

1. A method for grinding a sulfur compound, the method satisfying a relationship represented by inequality (1):

$$D2/D1 < 0.49 \tag{1}$$

wherein D1 represents a median diameter of the sulfur compound before grinding when the grinding comprises only a single pass of grinding, or a median diameter of the sulfur compound before any pass of grinding when the grinding comprises two or more passes of grinding; and

D2 represents a median diameter of the sulfur compound after grinding when the grinding comprises only a single pass of grinding, or a median diameter of the sulfur compound after the any pass of grinding when the grinding comprises two or more passes of grinding.

2. The method for grinding a sulfur compound according to claim 1, wherein a ratio of a grinding time t (min) to a weight m (g) of the sulfur compound is greater than 0 and less than 2.3.

3. A method for grinding a sulfur compound, the method satisfying a relationship represented by inequality (2):

$$A/B < 3.6 \times 10^{-3} \tag{2}$$

wherein A (S/cm) represents a difference between an ionic conductivity (S/cm) of the sulfur compound after grinding and an ionic conductivity (S/cm) of the sulfur compound before grinding when the grinding comprises only a single pass of grinding, or a difference in ionic conductivity (S/cm) of the sulfur compound between before and after any pass of grinding when the grinding comprises two or more passes of grinding; and

B ($\mu$m) represents a difference in median diameter ($\mu$m) of the sulfur compound between before and after grinding when the grinding comprises only a single pass of grinding, or a difference in median diameter ($\mu$m) of the sulfur compound between before and after any pass of grinding when the grinding comprises two or more passes of grinding.

4. The method for grinding a sulfur compound according to any one of claims 1 to 3, wherein the sulfur compound has lithium-ion conductivity.

5. A method for grinding a solid electrolyte comprising providing a solid electrolyte and grinding the solid electrolyte, the grinding satisfying a relationship represented by inequality (3):

$$D4/D3 < 0.49 \tag{3}$$

wherein D3 represents a median diameter of the solid electrolyte before grinding when the grinding comprises only a single pass of grinding, or a median diameter of the solid electrolyte before any pass of grinding when the grinding comprises two or more passes of grinding; and

D4 represents a median diameter of the solid electrolyte after grinding when the grinding comprises only a single pass of grinding, or a median diameter of the solid electrolyte after the any pass of grinding when the grinding comprises two or more passes of grinding.

6. The method for grinding a solid electrolyte according to claim 5, wherein a ratio of a grinding time t (min) to a weight m (g) of the solid electrolyte is greater than 0 and less than 2.3.

7. A method for grinding a solid electrolyte comprising providing a solid electrolyte and grinding the solid electrolyte, the grinding satisfying a relationship represented by inequality (4):

$$C/D < 3.6 \times 10^{-3} \tag{4}$$

wherein C (S/cm) represents a difference between an ionic conductivity (S/cm) of the solid electrolyte after grinding and an ionic conductivity (S/cm) of the solid electrolyte before grinding when the grinding comprises only a single pass of grinding, or a difference in ionic conductivity (S/cm) of the solid electrolyte between before and after any pass of grinding when the grinding comprises two or more passes of grinding; and

D ($\mu$m) represents a difference in median diameter ($\mu$m) of the solid electrolyte between before and after grinding when the grinding comprises only a single pass of grinding, or a difference in median diameter ($\mu$m) of the solid electrolyte between before and after any pass of grinding when the grinding comprises two or more passes of grinding.

8. The method for grinding a solid electrolyte according to any one of claims 5 to 7, wherein the providing comprises mixing raw materials constituting the solid electrolyte to form a mixture and firing the mixture.

9. A method for preparing a solid electrolyte comprising grinding a starting solid electrolyte powder, the grinding satisfying a relationship represented by inequality (5):

$$D6/D5 < 0.49 \qquad\qquad (5)$$

wherein D5 represents a median diameter ($\mu$m) of the starting powder when the grinding comprises only a single pass of grinding, or a median diameter ($\mu$m) of the solid electrolyte before any pass of grinding when the grinding comprises two or more passes of grinding; and
D6 represents a median diameter ($\mu$m) of the solid electrolyte after grinding when the grinding comprises only a single pass of grinding, or a median diameter ($\mu$m) of the solid electrolyte after the any pass of grinding when the grinding comprises two or more passes of grinding.

10. The method for preparing a solid electrolyte according to claim 9, wherein a ratio of a grinding time t (min) to a weight m (g) of the solid electrolyte is greater than 0 and less than 2.3.

11. A method for preparing a solid electrolyte comprising grinding a starting solid electrolyte powder, the grinding satisfying a relationship represented by inequality (6):

$$E/F < 3.6 \times 10^{-3} \qquad\qquad (6)$$

wherein E (S/cm) represents a difference between an ionic conductivity (S/cm) of the solid electrolyte after grinding and an ionic conductivity (S/cm) of the solid electrolyte before grinding when the grinding comprises only a single pass of grinding, or a difference in ionic conductivity (S/cm) of the solid electrolyte between before and after any pass of grinding when the grinding comprises two or more passes of grinding; and
F ($\mu$m) represents a difference in median diameter ($\mu$m) of the solid electrolyte between before and after grinding when the grinding comprises only a single pass of grinding, or a difference in median diameter ($\mu$m) of the solid electrolyte between before and after any pass of grinding when the grinding comprises two or more passes of grinding.

12. A solid electrolyte having a specific surface area S1 ($m^2$/g) measured by the BET method and a specific surface area S2 ($m^2$/g) calculated from a particle size distribution and a true density in an S1 to S2 ratio of less than 4.5.

13. The solid electrolyte according to claim 12, having a volume cumulative diameter $D_{90}$ at 90% of the cumulative volume in laser diffraction particle size distribution analysis of smaller than 40 $\mu$m.

14. The solid electrolyte according to claim 12 or 13, having a ratio of an ionic conductivity (S/cm) to a volume cumulative diameter $D_{50}$ ($\mu$m) at 50% of the cumulative volume in laser diffraction particle size distribution analysis of greater than $1.3 \times 10^{-3}$.

15. The solid electrolyte according to claim 12 or 13, having a ratio of a crystallite size (Å) to a volume cumulative diameter $D_{50}$ ($\mu$m) at 50% of the cumulative volume in laser diffraction particle size distribution analysis of 325 or greater.

16. The solid electrolyte according to claim 12 or 13, comprising a lithium element, a phosphorous element, and a sulfur element.

## INTERNATIONAL SEARCH REPORT

| International application No. |
| --- |
| **PCT/JP2023/024147** |

### A. CLASSIFICATION OF SUBJECT MATTER

***H01B 13/00***(2006.01)i; ***C01B 25/14***(2006.01)i; ***H01B 1/06***(2006.01)i; ***H01B 1/10***(2006.01)i; ***H01M 10/0562***(2010.01)i
FI:  H01B13/00 Z; H01B1/06 A; H01B1/10; H01M10/0562; C01B25/14

According to International Patent Classification (IPC) or to both national classification and IPC

### B. FIELDS SEARCHED

Minimum documentation searched (classification system followed by classification symbols)

H01B13/00; C01B25/14; H01B1/06; H01B1/10; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-186129 A (TOYOTA MOTOR CORP) 24 October 2019 (2019-10-24)<br>    paragraphs [0020], [0037], [0058] | 1, 4-5, 8-9 |
| A | | 2-3, 6-7, 10-16 |
| X | WO 2021/132537 A1 (MITSUI MINING & SMELTING CO., LTD.) 01 July 2021 (2021-07-01)<br>    paragraph [0145] | 12-13, 16 |
| A | | 1-11, 14-15 |
| X | JP 2020-126760 A (MITSUI MINING & SMELTING CO., LTD.) 20 August 2020 (2020-08-20)<br>    paragraph [0047] | 12-16 |
| A | | 1-11 |
| X | WO 2021/085238 A1 (MITSUI MINING & SMELTING CO., LTD.) 06 May 2021 (2021-05-06)<br>    paragraphs [0044]-[0045], [0056] | 12-16 |
| A | | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 September 2023** | **12 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024147**

| Patent document cited in search report | | | Publication date (day/month/year) | Patent family member(s) | Publication date (day/month/year) |
|---|---|---|---|---|---|
| JP | 2019-186129 | A | 24 October 2019 | US 2019/0319302 A1 paragraphs [0036], [0069]-[0072], table 2 | |
| WO | 2021/132537 | A1 | 01 July 2021 | US 2022/0263122 A1 paragraph [0132], table 1 | |
| JP | 2020-126760 | A | 20 August 2020 | (Family: none) | |
| WO | 2021/085238 | A1 | 06 May 2021 | US 2022/0376293 A1 paragraphs [0052]-[0053], table 1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009211950 A
- JP 2010140893 A
- JP 2008004459 A
- WO 2013099834 A
- WO 2015001818 A